# EUROPEAN PATENT APPLICATION

(11) **EP 4 585 350 A1**
(43) Date of publication of application: **16.07.2025**
(21) Application number: 23882264.7
(22) Date of filing: 07.09.2023
(51) Int. Cl.: B23K 13/00, G01N 21/952, B21C 37/08, G01B 11/02

(54) **ELECTRICAL RESISTANCE WELDED STEEL PIPE WELDING MANAGEMENT DEVICE, ELECTRICAL RESISTANCE WELDED STEEL PIPE WELDING MANAGEMENT METHOD, ELECTRICAL RESISTANCE WELDED STEEL PIPE MANUFACTURING METHOD, AND ELECTRICAL RESISTANCE WELDED STEEL PIPE WELDING MANAGEMENT SYSTEM**

(30) Priority: 27.10.2022 JP 2022172109
(71) Applicant: JFE Steel Corporation, Tokyo 100-0011 (JP)
(72) Inventor: MATSUMOTO, Atsushi, Tokyo 100-0011 (JP); NAKAZAWA, Ryo, Tokyo 100-0011 (JP); TSUNODA, Yuki, Tokyo 100-0011 (JP); KATSUMURA, Tatsuro, Tokyo 100-0011 (JP)
(74) Representative: Haseltine Lake Kempner LLP
(86) International application number: PCT/JP2023/032693
(87) International publication number: WO 2024/090051

(57) **Abstract**

A technique that can suppress welding defects is provided.

An electrical resistance welded steel pipe welding management device (100) includes a pre-electrical resistance welding edge temperature detector (122) configured to detect, before electrical resistance welding, based on temperature distribution information in a thickness direction of at least one of edge portions of the open pipe, an outer surface temperature Tₒ, an inner surface temperature Tᵢ, and a thickness center temperature Tc of the edge portion, an edge temperature difference calculator (125) configured to calculate a temperature difference ΔT between the outer surface temperature Tₒ and the inner surface temperature Tᵢ, a V convergence point extractor (133) configured to extract, based on image information of a region including both the edge portions of the open pipe and a welding point, two straight lines converging along the edge portions to extract a V convergence point being an intersection of the two straight lines, a V convergence angle calculator (134) configured to calculate a V convergence angle θ, a narrow gap length calculator (135) configured to calculate a distance from the V convergence point to the welding point as a narrow gap length L, and a welding state determiner (141) configured to determine whether an electrical resistance welding condition is satisfactory based on information of ΔT, Tc, θ, and L.

## Description

### Technical Field

The present invention relates to an electrical resistance welded steel pipe welding management device, an electrical resistance welded steel pipe welding management method, an electrical resistance welded steel pipe manufacturing method, and an electrical resistance welded steel pipe welding management system which enable suppression of welding defects by analyzing an image of an edge portion of an open pipe immediately before electrical resistance welding of the electrical resistance welded steel pipe.

### Background Art

An electrical resistance welded steel pipe is manufactured by continuously bending a steel sheet or a steel strip in a circumferential direction through roll forming, causing both end portions to butt against each other to form a hollow cylinder having a circular section to obtain a tubular open pipe, and then, continuously performing electrical resistance welding on both the edge portions of the open pipe having butted against each other.

In the electrical resistance welding, both the edge portions are heated to a temperature equal to or higher than the melting point by directly supplying power through contact tips or using an induced current generated by an induction coil, and, immediately after that, joint portions of both the edges are upset with welding rolls (squeeze rolls). In so doing, oxides (penetrators) generated through a melting and heating process of a steel sheet or a steel strip are caused to flow to the inner and outer surfaces of the pipe through the upsetting and discharged to unnecessary portion called a weld reinforcement (bead) to suppress generation of welding defects. After the electrical resistance welding, the bead portion is cut and removed from the pipe with a cutting tool or the like.

For suppressing the welding defects, it is important to suppress, as much as possible, generation of the penetrators and aggregation of the penetrators until the welding has been performed. For this purpose, it is required to adjust the welding conditions so as to avoid an excessive increase in time from the melting and heating process to the start of joining of both the edge portions. In is also important to discharge the penetrators to the bead without delay in a step of upsetting. For this purpose, it is required to reduce deviation of a temperature distribution in the thickness direction of the edge portions until the start of joining and suppress the occurrences of poor discharge of the penetrators due to solidification of melted edge portions during the upsetting. As a method for solving the above-described problems, various techniques have been disclosed to suppress the welding defects in the manufacture of the electrical resistance welded steel pipe. For example, a welding management system for a welding step has been proposed. In this system, an electrical resistance welding phenomenon is imaged and the temperature of the edge portion is measured in the melting and heating process.

Patent Literature 1 proposes a method for measuring a welding temperature. The method controls a heating condition of both edges by detecting, from a captured image, the coordinates of corner portion positions of an outer surface and an inner surface of both the edges of an open pipe before upsetting, calculating temperature distributions of corner portions of the outer surface and the inner surface of both the edges, and checking the detected coordinates and the calculated temperature distributions against each other to acquire the temperatures of the edges at the detected coordinates.

Patent Literature 2 proposes a monitoring device of electrical resistance welding for operation. This device acquires an image of the electrical resistance welding, acquires an image of a region including a V convergence portion where both edges of an open pipe before upsetting converge in a V shape, performs temperature conversion with a brightness level of the temperature of a region where a molten portion inside the thickness starts to be discharged to the surface in one of an upsetting portion of both the edges and a convergence point geometrically formed by both the edges in the image, and determines whether the temperature is greater than or equal to a threshold.

Patent Literature 3 proposes a monitoring device for operation. This monitoring device acquires an image of electrical resistance welding, acquires an image of a region including a V convergence portion where both edges of an open pipe before upsetting converge in a V shape, measures a distance L between a first V convergence point where both the edges geometrically intersect each other and a second V convergence point being an upsetting point of both the edge portions of the metal sheet, and measures a V convergence angle θ at this first V convergence point. The monitoring device determines whether the distance L and the V convergence angle θ satisfy a tolerance having been obvious in advance.

### Citation List

### Patent Literature

PTL 1: Japanese Unexamined Patent Application Publication No. 11-33621
PTL 2: Japanese Patent No. 5549963
PTL 3: Japanese Patent No. 5079929

### Summary of Invention

### Technical Problem

According to Patent Literature 1, the temperatures of the corner portions in the inner and outer surfaces of joint end surfaces are measured, and accordingly, influence of a lap state of both the end surfaces before upsetting can be monitored. In contrast, temperature information cannot be obtained from a thickness center portion that is least likely to be heated by high frequency heating of the electrical resistance welding. Thus, a problem arises in that sufficient weld characteristics cannot be obtained due to the lack of heating in the thickness center portion.

According to Patent Literature 2, whether the welding condition is satisfactory is determined by setting the lower limit value for the temperature of the outer surface or the inner surface in one of the upsetting portions of both the edges and the convergence point geometrically formed by both the edges. However, as is the case with Patent Literature 1, the temperature information cannot be obtained from the thickness center portion, and accordingly, a problem arises in that the sufficient weld characteristics cannot be obtained.

According to Patent Literature 3, whether the welding condition is satisfactory is determined using numeric data obtained by analyzing an image captured from the pipe outer surface side of the electrical resistance welding. However, in the actual electrical resistance welding, the end surfaces of both the edges butt against each other not only in an I shape in which the end surfaces of both the edges face so as to be parallel to each other but also in a V shape or an inverted V shape because of variation of a curvature distribution near end portions due to pre-welding edge forming of both the edges. In such a case, the appearance of the electrical resistance welding changes between the pipe outer surface side and the pipe inner surface side. Thus, the butting state of both the edge portions cannot be identified from the image on the pipe outer surface side, and a problem arises in that the sufficient weld characteristics cannot be obtained.

The present invention is made in view of the above-described situation and aimed to provide an electrical resistance welded steel pipe welding management device, an electrical resistance welded steel pipe welding management method, an electrical resistance welded steel pipe manufacturing method, and an electrical resistance welded steel pipe welding management system which enable suppression of welding defects.

### Solution to Problem

For achieving the above-described purpose, the inventors focus on management of temperature information of both edge potion end surfaces in the thickness direction in the electrical resistance welding, in particular, a temperature difference between the center in a pipe thickness and a pipe outer surface and the pipe inner surface.

In the electrical resistance welding, the inventors also focus on the relationship between an angle geometrically formed by two straight lines converging along both the edge portions (V convergence angle θ) and the following narrow gap length L. When the intersection of the two straight lines is defined as a V convergence point, the narrow gap length L is a distance between the V convergence point and a welding point where both the edges are joined to each other to start the welding. The inventors dedicatedly study influence of the V convergence angle θ and the narrow gap length L exerted on the form and the weld characteristics of the penetrators remaining in a weld after upsetting with squeeze rolls. As a result, the following is clarified.

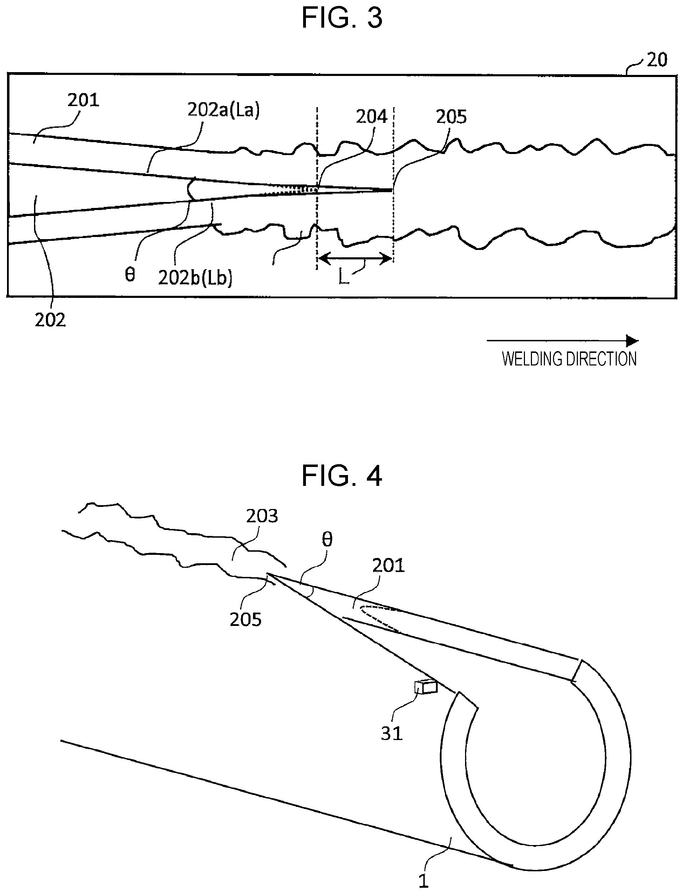

Herein, a flow of the electrical resistance welding is described with reference to an example from heating to welding of the electrical resistance welding illustrated in Figs. 3 and 4.

The electrical resistance welding of related-art performs heating by a direct Joule heating method or an induction heating method using a high frequency current. At this time, a skin effect appears at an initial stage of the heating due to a heating phenomenon unique to the high frequency heating. Thus, the temperature increases earlier in outer and inner surface sides of an edge portion than in a thickness center portion. The heat moves to the thickness center portion due to the heat conduction in the edge portion.

Next, as a heating process progresses, the distance between the end surfaces reduces. Accordingly, a proximity effect is produced and a heating rate in the thickness center portion increases. The electrical resistance welding is performed at an upset portion after upsetting has been performed with the squeeze rolls while the temperature of a very surface layer portion of an entire pipe thickness of the edge portion is increased to the melting point. At this time, molten metal of the edge portion is discharged to the outside of the pipe together with the penetrators distributed over the surface to form a welding bead 203.

As described above, in the electrical resistance welding, the temperature of the thickness center portion is likely to be low relatively due to delay of heating compared to the inner surface and the outer surface of the edge portion. When the heating is insufficient in the thickness center portion of the edge portion, a problem arises in that a sufficient amount of weld metal cannot be obtained to discharge the penetrators generated in the thickness center portion to the welding bead 203 in the heating process.

In order to address this problem, it is required that the proximity effect in the thickness center portion be produced at an earlier stage in the heating process. Thus, it is required that, for example, measures such as adjustment of the V convergence angle and reduction of the distance between the workcoils and the squeeze rolls be taken.

Furthermore, in the heating process, a temperature deviation between the inner surface and the outer surface of the edge portion varies depending on a state of butting of both the edges to be joined. That is, in the electrical resistance welding, an I-shaped butting is ideal. In the I-shaped butting, the butting of both the edges is not inclined, and both the edge surfaces are joined to each other from a really front surface when a cylindrical section of the pipe is seen from front (front in the pipe axis direction). At this time, the temperature deviation between the inner surface and the outer surface is almost nonexistent in both the edge portions, and the penetrators are discharged without delay to the outside of the pipe on the inner surface side and the outer surface side by the upsetting with the squeeze rolls.

In contrast, when the butting of both the edges is inclined, a uniform proximity effect is not produced on joint surfaces of the edge portions. Thus, a portion where the distance between the both edges is small is disproportionately heated. For example, when the cylindrical section is seen from front, the temperature rises significantly on the inner surface side of the edge portion in the case where the butting of both the edges are in a V shape, and the temperature rises significantly on the outer surface side of the edge portion in the case where the butting of both the edges are in an inverted-V shape. A portion where the distance between both the edges is large is insufficiently heated. As a result, in the upsetting with the squeeze rolls, discharge of the penetrators on the insufficiently heated side is blocked. This causes degradation of the weld quality.

Accordingly, for ensuring the weld quality, it is important to establish a welding condition that can suppress a delay in heating of the thickness center portion and the temperature deviation between the inner surface and the outer surface in the edge portion in a heating step until the upsetting with the squeeze rolls in the electrical resistance welding.

The present invention is based on the above-described knowledge and the gist of the present invention is as follows.
[1] An electrical resistance welded steel pipe welding management device is a welding management device for an electrical resistance welded steel pipe manufactured by bending a steel sheet or a steel strip in a circumferential direction, causing both edge portions to butt against each other to form an open pipe, and then, performing electrical resistance welding by upsetting both the edge portions of the open pipe having butted against each other. The electrical resistance welded steel pipe welding management device includes
   a pre-electrical resistance welding edge temperature detector configured to detect, before the electrical resistance welding, based on temperature distribution information in a thickness direction of at least one of the edge portions of the open pipe, an outer surface temperature Tₒ, an inner surface temperature Tᵢ, and a thickness center temperature Tc of the edge portion,
   an edge temperature difference calculator configured to calculate a temperature difference ΔT between the outer surface temperature Tₒ and the inner surface temperature Tᵢ,
   a V convergence point extractor configured to extract, based on image information of a region including both the edge portions of the open pipe and a welding point where both the edge portions of the open pipe are joined to each other to start welding, two straight lines converging along the edge portions to extract a V convergence point being an intersection of the two straight lines,
   a V convergence angle calculator configured to calculate a V convergence angle θ formed by the two straight lines,
   a narrow gap length calculator configured to calculate a distance from the V convergence point to the welding point as a narrow gap length L, and
   a welding state determiner configured to determine whether an electrical resistance welding condition is satisfactory based on information of a ratio ΔT/Tc of the temperature difference ΔT to the thickness center temperature Tc, the V convergence angle θ, and the narrow gap length L.
[2] In the electrical resistance welded steel pipe welding management device according to [1] described above,
   the welding state determiner determines that the electrical resistance welding condition is satisfactory when the narrow gap length L is smaller than or equal to an upper limit value that has been preset in accordance with the ratio ΔT/Tc of the temperature difference ΔT to the thickness center temperature Tc and a value of the V convergence angle θ.
[3] In the electrical resistance welded steel pipe welding management device according to [1] or [2] described above,
   the welding state determiner determines whether the electrical resistance welding condition is satisfactory depending on whether the ratio ΔT/Tc of the temperature difference ΔT to the thickness center temperature Tc falls within a range that has been preset in accordance with a value of the V convergence angle θ and a value of the L.
[4] An electrical resistance welded steel pipe welding management method is a welding management method for an electrical resistance welded steel pipe manufactured by bending a steel sheet or a steel strip in a circumferential direction, causing both edge portions to butt against each other to form an open pipe, and then, performing electrical resistance welding by upsetting both the edge portions of the open pipe having butted against each other. The electrical resistance welded steel pipe welding management method includes the steps of
   detecting a pre-electrical resistance welding edge temperature configured to detect, before the electrical resistance welding, based on temperature distribution information of at least one of the edge portions of the open pipe, an outer surface temperature Tₒ, an inner surface temperature Tᵢ, and a thickness center temperature Tc of the edge portion,
   calculating an edge temperature difference configured to calculate the temperature difference ΔT between the outer surface temperature Tₒ and the inner surface temperature Tᵢ,
   extracting a V convergence point configured to extract, based on image information of a region including both the edge portions of the open pipe and a welding point where both the edge portions of the open pipe are joined to each other to start welding, two straight lines converging along the edge portions to extract a V convergence point being an intersection of the two straight lines,
   calculating a V convergence angle configured to calculate a V convergence angle θ formed by the two straight lines,
   calculating a narrow gap length configured to calculate a distance from the V convergence point to the welding point as a narrow gap length L, and
   determining a welding state configured to determine whether an electrical resistance welding condition is satisfactory based on information of a ratio ΔT/Tc of the temperature difference ΔT to the thickness center temperature Tc, the V convergence angle θ, and the narrow gap length L.
[5] In an electrical resistance welded steel pipe manufacturing method for manufacturing an electrical resistance welded steel pipe by bending a steel sheet or a steel strip in a circumferential direction, causing both edge portions to butt against each other to form an open pipe, and then, performing electrical resistance welding by upsetting both the edge portions of the open pipe having butted against each other,
   during the electrical resistance welding, welding management is performed by the electrical resistance welded steel pipe welding management method according to [4] described above.
[6] An electrical resistance welded steel pipe welding management system includes
   the electrical resistance welded steel pipe welding management device according to any one of [1] to [3] described above,
   an edge temperature information acquisition device configured to acquire, before electrical resistance welding, temperature distribution information of at least one of edge portions of an open pipe, and
   a weld image capturing device configured to capture, before the electrical resistance welding, an image of both the edge portions of the open pipe and the welding point formed by convergence of both the edges.

### Advantageous Effects of Invention

According to the present invention, the welding defects can be suppressed.

### Brief Description of Drawings

[Fig. 1] Fig. 1 illustrates a welding management device and a welding management system including the welding management device for embodiment of the present invention.
[Fig. 2] Fig. 2 is a flowchart illustrating a procedure with the welding management device according to the present embodiment.
[Fig. 3] Fig. 3 illustrates portions of a weld image of the electrical resistance welding.
[Fig. 4] Fig. 4 illustrates formation of a bead through heating of edge portions and upsetting in the electrical resistance welding.
[Fig. 5] Fig. 5 is a graph illustrating a good or bad result (flattening height test result) of an electrical resistance welding quality in accordance with the ratio (ΔT/Tc) between a temperature difference between an inner and outer surfaces of a pipe and a temperature of a thickness center portion at the edge portion in the electrical resistance welding and values of a narrow gap length L.
[Fig. 6] Fig. 6 is a conceptual diagram illustrating the good or bad result of the electrical resistance welding in accordance with the narrow gap length L and the value of ΔT/Tc at V convergence angles θ1 to θ3.
[Fig. 7] Fig. 7 is a graph illustrating tolerances of the electrical resistance welding in an example. Description of Embodiments

Hereinafter, a welding management device and a welding management system as embodiment of the present invention will be described in detail with reference to the drawings. The embodiment does not limit the present invention. In illustration of the drawings, the same parts are denoted by the same reference numerals.

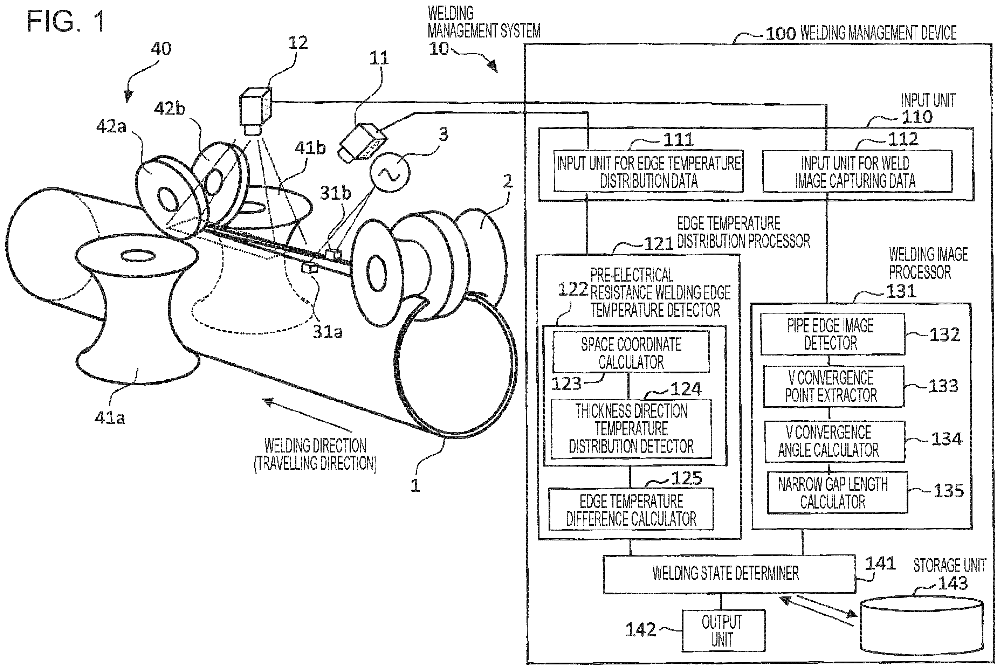

First, referring to Fig. 1, a flow of processing being an object of the present embodiment and a general configuration of the welding management system and the welding management device included in this system are described. Fig. 1 illustrates a welding management device and a welding management system including the welding management device, illustrating an example of the embodiment of the present invention.

A steel sheet (or a steel strip) is continuously formed into a cylindrical shape through roll forming. Then, the steel sheet travels in an arrow direction (welding direction) in Fig. 1 as a travelling direction while the stability of the cylindrical shape is ensured by a fin pass rolls 2, and the steel sheet is formed into an open pipe 1 while the butting position of both edge portions is centered. Then, the both edge portions of the open pipe 1 are heated until they become molten by supplying a radio-frequency current from a high frequency oscillator 3 via a pair of contact tips 31a and 31b. Induction heating workcoils can be used instead of the contact tips.

Next, both the edge portions of the open pipe 1 are brought into pressure contact with each other while passing through a welding stand 40 surrounded by a roll group including squeeze rolls 41a and 41b and top rolls 42a and 42b. The open pipe 1 is welded (electrical resistance welded) while a molten steel is discharged to the outside (an outer peripheral surface and an inner peripheral surface of the pipe-shaped steel sheet).

In the electrical resistance welding, both the edge portions of the open pipe 1 come closer to each other on the upstream (opposite direction side to the welding direction) of the squeeze rolls 41a and 41b, and a position where joining of both the edge portions starts is set to be a welding point. The position of the welding point moves forward and rearward in the welding direction depending on the magnitude relationship between a welding speed and an input power of the electrical resistance welding.

When the input power is larger, a geometric intersection (V convergence point (an intersection of two straight lines converging along both the edge portions)) of straight lines formed by both the edge portions of the open pipe 1 is not coincident with the welding point. This phenomenon is caused when, on the upstream of the squeeze rolls 41a and 41b, a discharge speed of molten portions to the outside is higher than a speed at which both the edge portions of the open pipe 1 come closer to each other. Here, the molten portions are produced at end surfaces of the edge portions due to electromagnetic forces generated by currents flowing through both the edge portions.

A welding management system 10 includes an edge temperature information acquisition device 11, a weld image capturing device 12, and a welding management device 100. The edge temperature information acquisition device 11 is configured to acquire information of a temperature distribution of at least one of the edge portions of the open pipe before electrical resistance welding. The weld image capturing device 12 is configured to capture images of both the edge portions of the open pipe and the welding point formed by convergence of both the edge portions before the electrical resistance welding. Hereinafter, the edge temperature information acquisition device 11, the weld image capturing device 12, and the welding management device 100 are described one by one.

The edge temperature information acquisition device 11 includes, for example, a thermometer configured to measure a temperature distribution based on a two-dimensional image as measurement with a thermography. The edge temperature information acquisition device 11 also includes a camera configured to capture images of the edge portions for acquiring an edge temperature distribution.

The edge temperature information acquisition device 11 is installed and the position of the edge temperature information acquisition device 11 is adjusted so that this camera can capture, throughout the thickness direction, images of predetermined regions of the edge portions of the open pipe 1 positioned between the contact tips 31a and 31b and the welding stand 40. The camera of the edge temperature information acquisition device 11 is configured to capture an image of a surface heated from a pipe outer surface to a pipe inner surface in at least one of the edge portions facing each other. At this time, although examples of the above-described thermometer include, for example, a radiation thermometer and two-color thermometer, either of these thermometers can be used as long as the thermometer can acquire the temperature distribution. The edge temperature information acquisition device 11 also includes adjusters such as a zoom lens and an exposure adjuster for adjustment of an optical system. The field of view for image capturing of the above-described adjuster is 100 mm × 40 mm, and the resolution of 500 µm/pixel or higher is preferably ensured. The resolution is more preferably 100 µm/pixel or higher.

At this time, the number of pixels of the camera is preferably greater than or equal to 1920 × 1080. When the resolution is lower than the 500 um/pixel, accuracy of detection of an edge portion temperature may be degraded.

The welding area image capturing device 12 includes, for example, a camera and is installed so that the weld image capturing device 12 can capture images downstream of the welding stand 40 in the welding direction with the camera. Thus, the welding area image capturing device 12 captures images of how both the edge portions (welding area) of the open pipe 1 are heated, molten, and brought into pressure contact with each other. The position of the welding area image capturing device 12 are adjusted so that a joint (V convergence point), which will be described later, and roll centers of the squeeze rolls 41a and 41b are included in the images to be captured by the welding area image capturing device 12. At this time, the camera may be for capturing color images or monochrome images.

The welding area image capturing device 12 also includes adjusters such as a zoom lens and an exposure adjuster for adjustment of an optical system. The field of view for image capturing of the above-described adjuster is 100 mm × 40 mm, and the resolution of 100 µm/pixel or higher is preferably ensured. The resolution is more preferably 50 µm/pixel or higher. At this time, the number of pixels of the camera is preferably greater than or equal to 1920 × 1080. When the resolution is lower than the 100 um/pixel, accuracy of detection of the V convergence point and the welding point may be degraded. Furthermore, a welding speed in the electrical resistance welding may exceed 100 m/min. Thus, for capturing an image of an arbitrary image capturing point one or more times within a region of a field of view of image capturing of 100 mm, the frame rate is preferably set to higher than or equal to 20 frames per second (fps). When the frame rate is lower than 20 fps, a region where an image of welding has not been analyzed may be generated in the weld of the electrical resistance welding, leading to missing of a welding defect.

The welding management device 100 is a welding management device for an electrical resistance welded steel pipe manufactured by bending a steel sheet or a steel strip in a circumferential direction, causing both edge portions to butt against each other to form an open pipe, and then, performing electrical resistance welding by upsetting both the edge portions of the open pipe having butted against each other. The welding management device 100 includes a pre-electrical resistance welding edge temperature detector 122 configured to detect, before the electrical resistance welding, based on temperature distribution information in a thickness direction of at least one of the edge portions of the open pipe, an outer surface temperature Tₒ, an inner surface temperature Tᵢ, and a thickness center temperature Tc of the edge portions, an edge temperature difference calculator 125 configured to calculate a temperature difference ΔT between the outer surface temperature Tₒ and the inner surface temperature Tᵢ, a V convergence point extractor 133 configured to extract, based on image information of a region including both the edge portions of the open pipe and a welding point where both the edge portions of the open pipe are joined to each other to start the welding, two straight lines converging along the edge portions to extract a V convergence point being an intersection of the two straight lines, a V convergence angle calculator 134 configured to calculate a V convergence angle θ formed by the two straight lines, a narrow gap length calculator 135 configured to calculate a distance from the V convergence point to the welding point as a narrow gap length L, and a welding state determiner 141 configured to determine whether an electrical resistance welding condition is satisfactory based on information of a ratio ΔT/Tc of the temperature difference ΔT to the thickness center temperature Tc, the V convergence angle θ, and the narrow gap length L.

Furthermore, the welding management device 100 may include an output unit 142 configured to output the determination result obtained by the welding state determiner 141.

The welding management device 100 can include, for example, an input unit for edge temperature distribution data 111 and an input unit for welding area image capturing data 112 as an input unit 110. The welding management device 100 is configured to acquire edge temperature distribution information obtained with the edge temperature information acquisition device 11 through an input operation with the input unit for edge temperature distribution data 111. Furthermore, the welding management device 100 is configured to acquire image information of the welding area captured with the welding area image capturing device 12 through an input operation with the input unit for welding area image capturing data 112.

The welding management device 100 includes a general-purpose computer such as a workstation or a personal computer and has a computation processing function with a central processing unit (CPU) or the like, an image processing function with a graphics processing unit (GPU) or the like, and a various types of memory functions such as a read-only memory (ROM) and a random-access memory (RAM) as examples of a storage unit 143, which will be described later. In addition, the welding management device 100 also includes an output unit for a recording medium such as a hard disk drive connected through a data communication terminal, a display device of graphics, an alarm, and the like.

The welding management device 100 is configured to use memory storing a processing program and the like and a CPU or the like executing the processing program to calculate the difference ΔT between the outer surface temperature Tₒ and the inner surface temperature Tᵢ of the edge portions and detect the thickness center temperature Tc at an edge temperature distribution processor 121. The welding management device 100 is also configured to calculate the V convergence angle θ and the narrow gap length L at a welding image processor 131. Whether the electrical resistance welding condition is satisfactory is determined based on the information of the ΔT, Tc, θ, and L at the welding state determiner 141.

The configuration and the functions of the welding management device 100 are described in more detail.

The edge temperature distribution processor 121 includes the pre-electrical resistance welding edge temperature detector 122 and the edge temperature difference calculator 125.

First, the pre-electrical resistance welding edge temperature detector 122 detects the temperature distribution in the thickness direction from the pipe outer surface to the pipe inner surface in at least one of the edge portions having been heated by the radio-frequency current.

The pre-electrical resistance welding edge temperature detector 122 may include a space coordinate calculator 123 (the space coordinate calculator 123 for a temperature detection range) and a thickness direction temperature distribution detector 124 (the thickness direction temperature distribution detector 124 at a specified position).

The space coordinate calculator 123 calculates coordinates in a three-dimensional space based on image information including the temperature distribution information in the edge portions of a predetermined region for acquiring the temperature distribution information.

Although it is not particularly limited, the space coordinate calculator 123 can calculate the space coordinates based on image data that can be expressed as a two-dimensional coordinate. The space coordinate calculator 123 can handle the image data as three-dimensional data by setting the X coordinate and the Y coordinate for an image itself in two-dimensional image data and also setting the Z coordinate in the depth direction of the image.

The thickness direction temperature distribution detector (thickness direction temperature distribution detector at a specified position) 124 is configured to detect the temperature distribution at a preset position in the longitudinal direction of the pipe. The thickness direction temperature distribution detector 124 detects at least the outer surface temperature Tₒ and the inner surface temperature Tᵢ of the edge portions. The thickness direction temperature distribution detector 124 also detects the thickness center temperature Tc.

The edge temperature difference calculator 125 is configured to calculate the temperature difference ΔT between the outer surface temperature Tₒ and the inner surface temperature Tᵢ in the edge portions of the open pipe at a preset position (specified position).

The welding management device 100 performs a series of processes as described above at the edge temperature distribution processor 121.

The welding image processor 131 includes a pipe edge image detector 132, the V convergence point extractor 133, the V convergence angle calculator 134, and the narrow gap length calculator 135. In parallel with the above-described processes at the edge temperature distribution processor 121, the pipe edge image detector 132 is configured to detect both ends of the red-hot edge portion around the V convergence point based on the information of a welding image.

The V convergence point extractor 133 is configured to generate, based on the image information of the region including both the edge portions of the open pipe and the welding point where both the edge portions of the open pipe are joined to each other to start the welding, two straight lines converging along the edge portions to extract the V convergence point being the intersection of the two straight lines. The above-described image information is obtained when the weld image capturing device 12 captures the image.

The V convergence angle calculator 134 calculates the V convergence angle θ formed between two straight lines described above.

The narrow gap length calculator 135 calculates the distance from the V convergence point to the welding point as the narrow gap length L.

The welding management device 100 performs a series of processes as described above at the welding image processor 131.

Furthermore, the welding management device 100 executes a welding management process by, for example, performing welding determination with the welding state determiner 141 based on the above-described temperature difference ΔT, the V convergence angle θ, and the narrow gap length L and outputting the determination result with the output unit 142.

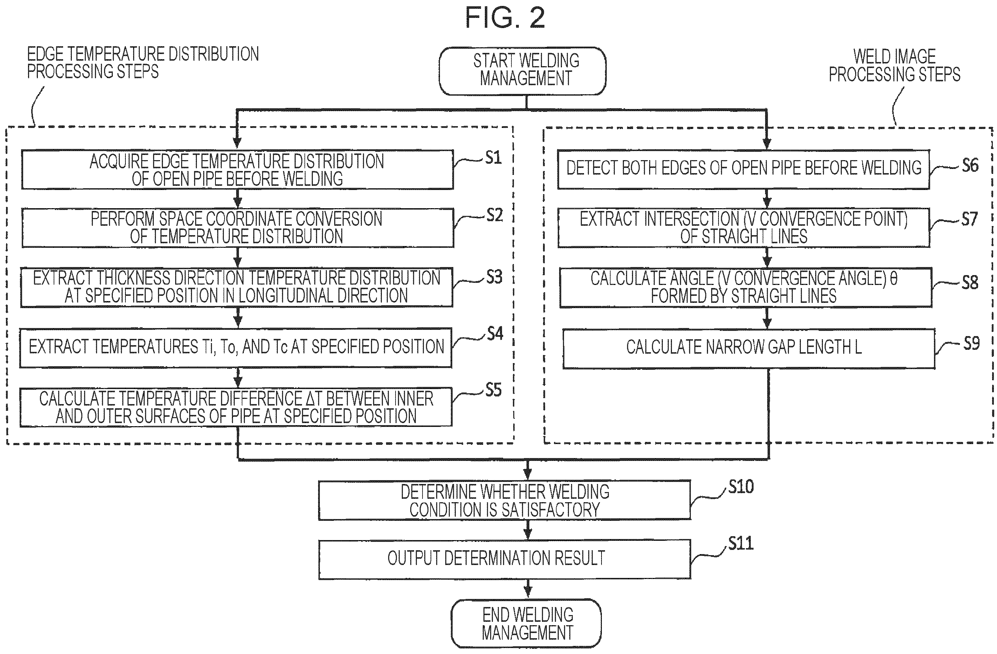

Here, referring to a flowchart illustrated in Fig. 2, a welding management procedure with the welding management device 100 is described. Fig. 2 is a flowchart illustrating the procedure with the welding management device according to the present embodiment. In the flowchart illustrated in Fig. 2, processing proceeds to a process in step S1 at timing when, for example, an instruction to start the welding management process is input to the input unit for edge temperature distribution data 111 by an operator. Steps S1 to S5 are also referred to as edge temperature distribution processing steps. Furthermore, the processing proceeds to a process in step S6 at timing when an instruction to start the welding management process is input to the input unit for welding area image capturing data 112 by the operator. Steps S6 to S9 are also referred to as welding area image processing steps. The processes from step S1 (edge temperature distribution processing steps) and the processes from step S6 (welding area image processing steps) may be performed in parallel with each other.

In the process of step S1, for at least one of both the edge portions of the open pipe 1 having been heated by high frequency heating, the edge temperature distribution processor 121 acquires from the edge temperature information acquisition device 11 the information of the two-dimensional temperature distribution throughout the thickness of the edge portions at a position in the longitudinal direction preset before the welding.

The edge temperature distribution processor 121 detects the information of the two-dimensional temperature distribution on the joint surface of the edge portions, that is, the information of the two-dimensional temperature distribution in the longitudinal direction of the pipe and the thickness direction out of the temperature distribution information including the captured image information.

Thus, the process in step S1 is completed, and the welding management process proceeds to the process in step S2.

In the process of step S2, the space coordinate calculator 123 (space coordinate calculator 123 for a temperature detection range) included in the pre-electrical resistance welding edge temperature detector 122 detects a plurality of coordinate standard points from the information of the two-dimensional temperature distribution obtained (the image of which is captured) in the process of step S1 or the image information captured by the camera (charge-coupled device (CCD) camera) attached to the edge temperature information acquisition device 11 and performs space coordinate conversion from the pixels to the unit of length.

The coordinate standard points described herein are preferably markers as follows: the coordinate positions of the markers or the distance between the standard points of the markers is obvious in advance. However, this is not limiting. The space coordinate calculator 123 detects the distance between arbitrary two standard points and inputs an actual space distance of the distance between the standard points. Thus, the space coordinate conversion in the image information of the temperature distribution information is performed. At the same time, the space coordinate calculator 123 sets the original point of two-dimensional coordinates at an arbitrary position in the image information of the temperature distribution information. The space coordinate calculator 123 may derive, in advance, a computation formula required for the coordinate conversion from the pixels to the unit of length. Thus, the process in step S2 is completed, and the welding management process proceeds to the process of step S3.

In the process of step S3, the thickness direction temperature distribution detector (thickness direction temperature distribution detector at a specified position) 124 included in the pre-electrical resistance welding edge temperature detector 122 detects the temperature distribution, together with the coordinate values, in the thickness direction of the edge portion at an arbitrary position in the longitudinal direction of the pipe from the temperature distribution information after the above-described space coordinate conversion process.

Although it is not particularly limited, the arbitrary position in the longitudinal direction of the pipe is preferably an arbitrary position in a range from a position shifted 3 mm toward a direction opposite to the welding direction relative to a roll center portion of the squeeze rolls 41a and 41b to an intermediate position between the roll center position of the squeeze rolls 41a and 41b and the contact tips 31 or the workcoils (not illustrated).

The range in which the thickness direction temperature distribution detector 124 detects the temperature distribution includes a region ±0.5 mm in the longitudinal direction relative to the specified position in the longitudinal direction of the pipe, and the thickness direction temperature distribution detector 124 detects the entire thickness region of the edge portion.

Corner portions being the outer surface and the inner surface of the edge portion exhibit the likelihood of being heated compared to other portions than the corner portions such as a flat portion due to a skin effect unique to the radio-frequency heating.

Accordingly, the temperature distribution in the thickness direction has peaks at the corner portion positions of the outer surface and the inner surface of the edge portion. From this characteristic, as the determination of the entire thickness region, the thickness of the pipe is determined to be the distance between the peaks detected in the outer surface position and the inner surface position of the edge portion based on the temperature distribution in the thickness direction. When deviation between the determined thickness of the pipe (determined pipe thickness value) and the preset thickness of the pipe (actual thickness) is within ±3%, the measurement result of the temperature distribution is determined to be sufficiently accurate.

When the above-described deviation is not within ±3%, the field of view of the edge temperature information acquisition device 11 is adjusted, and the processes from steps S1 to S3 are performed again. This is to be repeated until the above-described deviation falls within ±3%. Thus, the process in step S3 is completed, and the welding management process proceeds to the process of step S4.

In the process of step S4, based on the temperature distribution information of at least one of the edge portions of the open pipe, the pre-electrical resistance welding edge temperature detector 122 detects the outer surface temperature Tₒ and the inner surface temperature Tᵢ of the edge portion.

Specifically, using the detected temperature distribution information in the thickness direction, the pre-electrical resistance welding edge temperature detector 122 (the thickness direction temperature distribution detector 124) detects the temperatures at peak center positions (vertex positions of the peaks) of the temperature information in the pipe outer surface position and the pipe inner surface position of the edge portion as the outer surface temperature Tₒ and the inner surface temperature Tᵢ, respectively.

Furthermore, the pre-electrical resistance welding edge temperature detector 122 (the thickness direction temperature distribution detector 124) detects a temperature of a center position of peaks of the temperature at the outer surface position and the inner surface position of the pipe edge portion and sets the detected temperature as the temperature Tc of a thickness center portion.

Thus, the process in step S4 is completed, and the welding management process proceeds to the process of step S5.

In the process of step S5, the edge temperature difference calculator 125 calculates the temperature difference ΔT between the above-described outer surface temperature Tₒ and the above-described inner surface temperature Tᵢ of the edge portion that have been detected. Here, the edge temperature difference calculator 125 can subtracts the outer surface temperature Tₒ from the inner surface temperature Tᵢ and store the difference value remaining positive/negative signed to the storage unit 143. Thus, the process in step S5 is completed, and the welding management process proceeds to the process of step S10.

In the process of step S6 performed in parallel with steps S1 to S5 described above, based on the image information captured by the welding area image capturing device 12, the pipe edge image detector 132 of the welding image processor 131 detects the edge of the red-hot edge portion heated by high frequency heating. Here, a differentiation is used as the edge detection method, this is not limiting. Specifically, description is made with reference to Figs. 3 and 4.

Fig. 3 illustrates portions of a welding area image of the electrical resistance welding. Fig. 4 illustrates formation of a bead through heating of edge portions and upsetting in the electrical resistance welding.

First, the pipe edge image detector 132 acquires an edge detection image 20 of the welding area from variation of brightness around a heated portion 201 using a captured image. Furthermore, at the same time, the conversion process from the number of pixels in the image to the unit of length is performed. Here, although a two-axis XY coordinate system with the original point set at lower left end portion of the edge detection image 20 is used and the length is treated in mm, these are not limiting. In the conversion process from the number of pixels to the unit of length, the number of pixels per 100 mm is detected in advance by capturing a standard sample such as a gage in the same field of view to perform the conversion process from the number of pixels to the length. Thus, the process in step S6 is completed, and the welding management process proceeds to the process of step S7.

In the process of step S7, based on the information of the edge detection image of the welding area (the image of the region including both the edge portions of the open pipe and the welding point where both the edge portions of the open pipe are joined to each other to start the welding), the V convergence point extractor 133 generates two straight lines converging along the edge portions to extract the V convergence point being the intersection of the two straight lines.

Specifically, for example, the V convergence point extractor 133 first performs an image processing in the vertical direction (direction perpendicular to the welding direction (circumferential direction of pipe)) from an opening 202 where both the edge portions are not joined to each other in the edge detection image 20 of the above-described welding area and sets a position where the edge is detected first as a point on each edge portion. The V convergence point extractor 133 performs the same or similar process at some points (for example, three to ten points) out of the entire length of the opening 202 in the longitudinal direction. The V convergence point extractor 133 generates straight lines La and Lb approximating both edge end surfaces of the open pipe by using a least square method from a plurality of points detected on both the edge portions. Here, the opening 202 is a region interposed between heated portions 201 of both the edges. Before detecting a point on each edge portion, for example, a position included in the opening 202 may be manually specified in advance. However, this is not limiting.

The V convergence point extractor 133 extracts an intersection of the straight lines La and Lb as a V convergence point 204.

Thus, the process in step S7 is completed, and the welding management process proceeds to the process of step S8.

In the process of step S8, the V convergence angle calculator 134 calculates and extracts the V convergence angle θ using the straight lines La and Lb calculated by the above-described detection of both the edges of the open pipe. The V convergence angle θ in the edge detection image of the welding area is formed by two straight lines La and Lb and defined as an acute angle on the opening 202 side.

The V convergence point 204 in the edge detection image of the welding area is an intersection of two straight lines La and Lb. Regarding the detected V convergence angle θ, the V convergence angle calculator 134 can calculate with a geometric formula. Regarding the V convergence point 204, the V convergence point extractor 133 can calculate with a geometric formula and convert it into the number and coordinate data. Thus, the process in step S8 is completed, and the welding management process proceeds to the process of step S9.

In the process of step S9, the narrow gap length calculator 135 calculates and extracts the narrow gap length L being the distance between the V convergence point 204 and a point where both the edge end surfaces 202a and 202b of the open pipe are actually physically joined together (hereinafter, referred to as a "welding point 205" (see Fig. 3)). Here, the narrow gap length calculator 135 first detects the position of the welding point 205.

The narrow gap length calculator 135 determines whether the opening 202 exists downstream of the position of the V convergence point 204 (welding direction side). At this time, the narrow gap length calculator 135 determines that the opening 202 exists when pixels having a brightness smaller than a predetermined threshold continuously exist in the welding direction on the downstream side of the V convergence point 204. This determination on existence of the opening 202 is repeatedly performed on the edge detection image 20 for certain time. The narrow gap length calculator 135 regards the most downstream position where the opening 202 is determined to exist as the welding point 205 and detects as coordinate data of the welding point 205. The time required for the determination is preferably longer than or equal to a single period of the squeeze roll (SQ roll).

Although a deviation between the position of the V convergence point 204 and the position of the welding point 205 on the vertical direction side may occur due to a twist

(rotation of the pipe in the circumferential direction) generated during the manufacture of the electrical resistance welded steel pipe, this deviation can be adjusted by positional correction as needed. However, in the above-described detection of the position of the welding point 205, even when the deviation on the vertical direction side occurs, the deviation is within a range not influencing the detection result.

The narrow gap length calculator 135 performs calculation with the following value set as the narrow gap length L: the value is obtained by subtracting the position coordinate of the horizontal component out of the coordinate data of the V convergence point 204 from the position coordinate of the horizontal component out of the coordinate data of the welding point. Here, when it is determined that the opening 202 does not exist downstream of the position of the V convergence point 204 (welding direction side), the narrow gap length calculator 135 performs calculation with the narrow gap length L set to 0. Thus, the process in step S9 is completed, and the welding management process proceeds to the process of step S10.

In the process of step S10, after the processes of steps S5 and S9 have been completed, the welding state determiner 141 determines whether the electrical resistance welding condition is satisfactory based on the ratio ΔT/Tc of the temperature difference ΔT between the outer surface temperature Tₒ and the inner surface temperature Tᵢ of the pipe edge surface at the specified position to the thickness center temperature Tc, the V convergence angle θ, and the narrow gap length L.

Regarding this determination of good or bad, the welding state determiner 141 may determine that the electrical resistance welding condition is satisfactory when the narrow gap length L is smaller than or equal to an upper limit value that has been preset in accordance with the ratio ΔT/Tc of the temperature difference ΔT to the thickness center temperature Tc and the value of the V convergence angle θ.

Alternatively, the welding state determiner may determine whether the electrical resistance welding condition is satisfactory depending on whether the ratio ΔT/Tc of the temperature difference ΔT to the thickness center temperature Tc falls within a range that has been preset in accordance with the value of the V convergence angle θ and the value of the above-described L.

In a specific example of a method for determining whether the electrical resistance welding condition is satisfactory, evaluation testing is performed on the welds offline using steel pipes obtained under various welding conditions. The relationships between the evaluation testing results of the welds and the following obtained items are clarified in advance: the characteristics of the weld; the temperature Tc of the thickness center portion; the temperature difference ΔT between the outer surface temperature Tₒ and the inner surface temperature Tᵢ in the pipe edge surface at the specified position; the V convergence angle θ; and the narrow gap length L. More specifically, upper and lower limits of a tolerance of the following ratio are set: the ratio ΔT/Tc between the thickness center portion Tc at the specified position and the temperature difference ΔT between the outer surface temperature Tₒ and the inner surface temperature Tᵢ of the pipe edge surface at the specified position.

The value of ΔT/Tc can be positive or negative. When the absolute value of ΔT/Tc is large, that is, ΔT is excessively large or Tc is excessively small, discharging of the penetrators to the outside of the pipe is likely to be blocked. Thus, when ΔT/Tc is within the upper and lower limits of the positive and negative tolerance, this indicates that the welding condition does not block the discharging of the penetrators.

In the setting of the tolerance, the narrow gap length L and the V convergence angle θ are handled as parameters. Examples of the offline evaluation testing of the weld include a flattening test, an ultrasonic flaw detection test detecting oxides in the weld (in conformity with JIS G 0583 "Automated eddy current examination of steel pipes and tubes"), a Charpy impact test with a test specimen cut out from the weld (in conformity with JIS Z 2242 "Method for Charpy pendulum impact test of metallic materials"), and the like. The method for testing is selected in accordance with the desired characteristics.

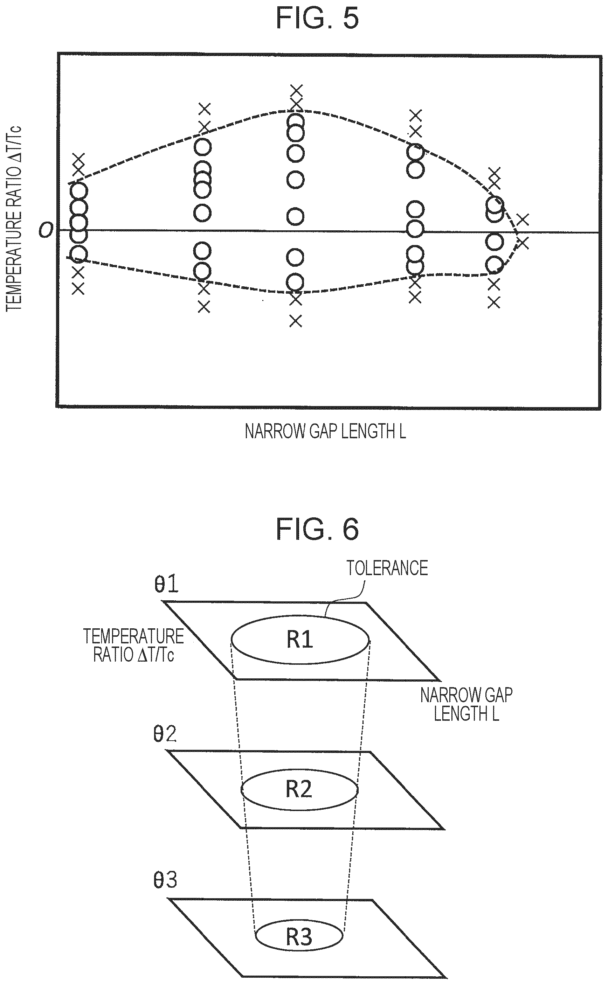

An example of a method for setting the upper and lower limits of the tolerance of the following ratio is described below with illustration in Figs. 5 and 6: the ratio ΔT/Tc between the thickness center portion Tc at the specified position and the temperature difference ΔT between the outer surface and the inner surface of the pipe edge surface at the specified position. However, these are not limiting.

Under various welding conditions, the measurement positions of the thickness center portion Tc at the specified position and the temperature difference ΔT between the outer surface and the inner surface of the pipe edge surface at the specified position are arbitrary. First, the temperature is measured with the edge temperature information acquisition device 11 at the position on the forming machine side relative to the squeeze rolls 41a and 41b (see Fig. 1), that is, on the upstream side (opposite direction side to the welding direction). Furthermore, the edge temperature information acquisition device 11 also measures the temperature at a position where the difference between the temperature of the thickness center portion Tc and the melting point of the material of the pipe is smaller than or equal to a predetermined value.

For example, the temperature is measured at a position where the difference between the temperature of the thickness center portion Tc and the melting point of the material of the pipe (the melting point (°C) - Tc (°C)) is smaller than or equal to 300 °C.

When the thickness center portion Tc is lower than the melting point by more than 300 °C, that is, when the melting point of the material of the pipe (°C) - Tc (°C) exceeds 300 °C, a heating process of both the edges until the welding is unclear, and the relationship between the narrow gap length L and the temperature distribution of the both the edge end surfaces is unlikely to be recognized.

In the temperature measurement, the melting point of the material of the pipe (°C) - Tc (°C) is preferably smaller than or equal to 200 °C, and more preferably, smaller than or equal to 100 °C.

Next, the arbitrary V convergence angle θ is fixed, and the electrical resistance welding is performed while the input power of the welding is varied. At this time, based on the information obtained from the edge temperature information acquisition device 11 and the weld image capturing device 12, from end surface temperature distribution of the pipe edges, the welding management device 100 each measures the temperature of the thickness center portion Tc at the specified position, the temperature difference ΔT between the outer surface temperature Tₒ and the inner surface temperature Tᵢ of the pipe edge surface at the specified position, and the narrow gap length L and calculates average values of these. The averages are calculated from 100 pieces of the image data.

Five samples having a length of 100 mm are arbitrarily extracted from electrical resistance welded pipes obtained through the individual electrical resistance welding and subjected to the flattening test described in JIS G3478: 2015. A flattening ratio H/D is obtained using a diameter D of the pipe and a distance H between flat sheets at the time when the weld starts to crack in the flattening test. The maximum value of the flattening rate H/D out of the samples is used. The welding condition that satisfies a desired flattening rate H/D is extracted from the maximum value of the flattening rate H/D.

Fig. 5 is a graph illustrating a good or bad result (flattening height testing result) of an electrical resistance welding quality in accordance with the ratio (ΔT/Tc) of the temperature difference between the inner and outer surfaces of the pipe to the temperature of the thickness center portion and the value of the narrow gap length L of the edge portions of the electrical resistance welding.

In the example illustrated in Fig. 5, the flattening ratio H/D (the maximum value of the flattening ratio H/D) of the weld of smaller than or equal to 0.5 is regarded as satisfactory and represented by a circle, and the flattening ratio of greater than 0.5 is regarded as unsatisfactory and represented by a cross. The welding state determiner 141 determines a boundary for the good or bad determination and sets the upper and lower limits of the temperature ratio ΔT/Tc with the arbitrary narrow gap length L. Examples of the boundary for the good or bad determination of the weld quality include, but not limited to, a method in which a boundary curve is set with the narrow gap length L as a function and recorded in the storage unit 143, a method in which the upper and lower limits of the temperature ratio ΔT/Tc are preset for the arbitrary narrow gap length L and recorded in the storage unit 143, and the like.

Regarding the setting of the upper and lower limits of the temperature ratio ΔT/Tc with the arbitrary narrow gap length as described above, the welding state determiner 141 changes the V convergence angle θ to determine a similar or the same boundary for the good or bad determination.

Furthermore, the welding state determiner 141 can determine the boundary for the good or bad determination by setting the upper limit value of the narrow gap length L in accordance with ΔT/Tc to change the V convergence angle θ.

The V convergence angle θ can be adjusted by changing a fin width of a fin roll of a final fin pass stand disposed farthest to the welder side out of a fin pass stand group existing upstream of the squeeze rolls. However, this is not limiting.

As described above, for each V convergence angle θ, the upper and lower limits of the temperature ratio ΔT/Tc with the narrow gap length L can be obtained.

Fig. 6 is a conceptual diagram illustrating the good or bad result of the electrical resistance welding in accordance with the narrow gap length L and the value of ΔT/Tc at V convergence angles θ1 to θ3. Referring to Fig. 6, in the conceptual diagram, the relationships between the narrow gap length L and the temperature ratio ΔT/Tc and the tolerances (flattening height satisfactory range) for the respective relationships are vertically arranged.

The tolerance (flattening height satisfactory range) of the temperature ratio ΔT/Tc with the arbitrary narrow gap length L obtained from the condition of the arbitrary V convergence angle θ2 is calculated from interpolation calculation.

According to a specific example of this calculation method, first, for example, the angle θ is set as a variable, and a good or bad determination region R (L, ΔT/Tc) is set as a function of θ. The good or bad determination region R2 of the angle θ2 assumed from known good or bad determination regions R1 and R3 is calculated as a linear function of θ.

When described with reference to Fig. 6, in a case where the good or bad determination regions R1 and R3 of θ1 and θ3 are known, for example, the lower limits |ΔT/Tc|1 and |ΔT/Tc|3 of ΔT/Tc for the same narrow gap length L in each of the regions are obtained.

Next, straight lines connecting these two points (θ1, L, |ΔT/Tcl1) and (θ3, L, |ΔT/Tc|3) to each other are drawn. Thus, |ΔT/Tc| can be expressed as a linear function of θ. Accordingly, at the arbitrary angle θ2, the lower limit |ΔT/Tc|2 with the narrow gap length L can be obtained. The calculation is repeatedly performed to derive the entire good or bad region.

Using these boundary conditions, in accordance with the V convergence angle θ, when the temperature ratio ΔT/Tc with the narrow gap length L in the arbitrary welding condition is within the satisfactory range of the weld, the welding state determiner 141 determines that the electrical resistance welding condition is satisfactory. When the temperature ratio ΔT/Tc is not satisfactory, the welding state determiner 141 determines that the electrical resistance welding condition is inappropriate. When the narrow gap length l is smaller than or equal to an upper limit value preset in accordance with the values of ΔT/Tc and the V convergence angle θ, the welding state determiner 141 may determine that the electrical resistance welding condition is satisfactory. In contrast, when the narrow gap length L is not satisfactory, the welding state determiner 141 determines that the electrical resistance welding condition is inappropriate.

The result obtained through this process can be recorded in the storage unit 143. Thus, the process in step S10 is completed, and the welding management process proceeds to the process of step S11.

In the process of step S11, the output unit 142 outputs to the outside the good or bad determination of the welding condition obtained in step S10. The output of the determination result to the outside is required to be recognized by the operator. Thus, the output to a graphical device, an alarm, or the like included in the welding management device 100 is preferred. Thus, the process in step S11 is completed, and the series of welding management process is finished.

The electrical resistance welded steel pipe welding management device has been described as the embodiment of the present invention.

The present invention also provides a welding management method using the welding management device, an electrical resistance welded steel pipe manufacturing method including the welding management method, and further, a welding management system including the welding management device.

Using the electrical resistance welded steel pipe manufacturing method, an electrical resistance welded steel pipe is manufactured by continuously bending a steel sheet or a steel strip in a circumferential direction, causing both edge portions to butt against each other to form an open pipe, and then, electrical resistance welding is performed by continuously upsetting both the edge portions of the open pipe having butted against each other. During the electrical resistance welding, welding management is performed through a process (welding management method) performed by the above-described welding system.

As has been described, according to the present invention, welding defects can be suppressed by highly accurately measuring the heating distribution at the end surface and the narrow gap length during the electrical resistance welding and considering the amount of the discharged molten steel after the welding.

More specifically, the welding defects can be suppressed by reducing the temperature distribution in the thickness direction during the electrical resistance welding and improving accuracy of heat input adjustment.

Furthermore, the above-described embodiment of the present invention is merely an example of embodiment of the present invention. Thus, the present invention is not limited to the above-described embodiment, and other embodiments, examples, operating techniques, and the like made by one skilled in the art without departing from the gist of the present invention are entirely included in the category of the present invention.

### EXAMPLES

For various electrical resistance welded pipes having a thickness of 4 mm and a steel-pipe outer diameter of 100 mm, first, for deriving the tolerances of the welding conditions, the upper and lower limits of the temperature ratio ΔT/Tc with the narrow gap length L were derived. Here, the electrical resistance welding was performed as follows: the position where the temperature Tc of the edge thickness center portion and the temperature difference ΔT between the outer surface and the inner surface of the pipe edge surface at the specified position were measured was set at 5 mm upstream (on the opposite direction side to the welding direction) of a position immediately below the axis of the squeeze rolls of the welding stand, and the welding speed was set to 40 m/min by adjusting edge bend form during forming.

At this time, the V convergence angle θ was incremented by 0.5° steps from 3 to 5° by varying the fin width of the fin roll of the last stand of the fin path stand.

Then, the upper and lower limits of the temperature ratio ΔT/Tc with the arbitrary narrow gap length L were derived under individual V convergence angle θ conditions. Here, ΔT was a value obtained by subtracting the outer surface temperature Tₒ from the inner surface temperature Tᵢ of the pipe edge at the specified position.

In various types of electrical resistance welding, two-dimensional images of the temperature distribution before welding were obtained using a two-color thermometer camera and in the following settings: the frame rate is 20 fps, the number of pixels in the pipe longitudinal direction is 1920 pixels, the number of pixels in the pipe thickness direction is 1080 pixels, and the field of view in the pipe longitudinal direction is 50 mm. In various types of electrical resistance welding, images around the weld during welding were obtained using a CCD camera and in the following settings: the frame rate is 20 fps, the number of pixels in the pipe longitudinal direction is 1920 pixels, and the field of view in the pipe longitudinal direction is 60 mm. From these acquired images, the following items were calculated in each frame: the temperature Tc of the thickness center portion at the specified position; the temperature difference ΔT between the outer surface temperature Tₒ and the inner surface temperature Tᵢ in the pipe edge surface at the specified position; the narrow gap length L; and the V convergence angle θ. Out of the calculated items of data, 100 pieces of data were averaged in each item, and the averaged data was set as operation data in each welding condition.

Furthermore, the steel pipes obtained through the electrical resistance welding were cut into pieces having a length of 100 mm and subjected to the flattening test for the weld in conformity with JIS G3478: 2015. Thus, the flattening ratio H/D was measured. The maximum value of the results of the measurement of the flattening ratio H/D five times obtained as described above was set as quality data of the weld in each welding condition. The boundary of the good or bad determination was set as follows: using the operation data and the quality data of the weld, reflection was performed on a map indicating the relationship between the narrow gap length L and the temperature ratio ΔT/Tc. In each welding condition, a condition was regarded as satisfactory when, under this condition, a steel pipe with which the maximum value of the flattening ratio H/D was smaller than or equal to 0.5 was obtained. In each welding condition, a condition was regarded as unsatisfactory when, under this condition, a steel pipe with which the maximum value of the flattening ratio H/D was greater than 0.5 was obtained.

In the present example, as the upper and lower limit values of the temperature ratio ΔT/Tc with the narrow gap length L not measured in advance, the upper and lower limit values of the temperature ratio ΔT/Tc with the narrow gap length having been clarified around the not measured narrow gap length L were used. The upper and lower limit values of the temperature ratio ΔT/Tc with the not measured narrow gap length L were obtained by performing the interpolation calculation using a liner function formula in which the narrow gap length L having been clarified is the function.

Likewise, in the present example, as the upper and lower limit values of the temperature ratio ΔT/Tc under the condition of the V convergence angle θ not measured in advance, the upper and lower limit values of the temperature ratio ΔT/Tc with a certain narrow gap length L having been clarified around the not measured V convergence angle θ were used. The upper and lower limit values of the temperature ratio ΔT/Tc under the condition of the V convergence angle θ not measured in advance were obtained by performing interpolation calculation using a liner function formula in which the V convergence angle θ is the function.

Thus, the tolerances of the welding conditions have been derived.

Next, in the manufacture of the electrical resistance welded pipes having a thickness of 4 mm and an outer diameter ϕ of 100 mm, the electrical resistance welding was performed with the V convergence angle θ set to 3° and the welding speed set to 40 m/min.

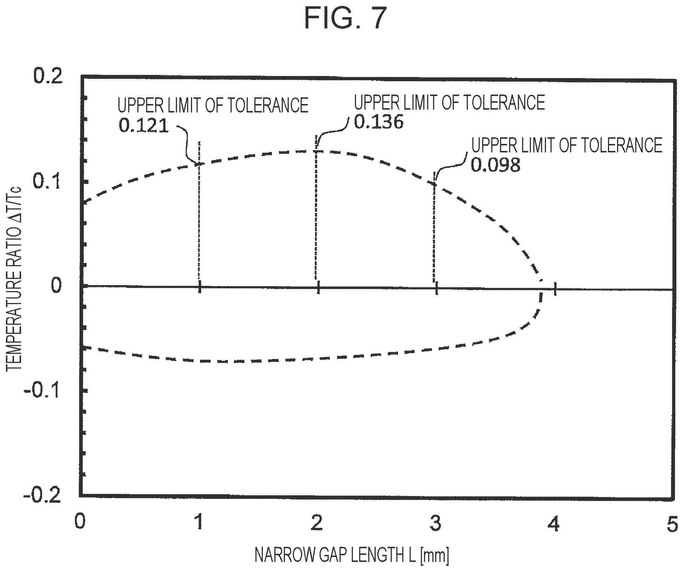

Here, the measurement condition of the temperature Tc of the edge thickness center portion and the temperature difference ΔT between the outer surface and the inner surface of the pipe edge surface at the specified position and the measurement method of the narrow gap length L and the V convergence angle θ were the same as those in the condition of the derivation of a common range. Fig. 7 illustrates tolerance examples of the welding condition having been derived in advance under the above-described condition. Furthermore, the obtained steel pipes were cut into pieces having a length of 100 mm and subjected to the flattening test for weld in conformity with JIS G3478: 2015. Thus, the flattening ratio was measured. The flattening test was performed ten times, and in each case, the condition with which the flattening ratio H/D was smaller than or equal to 0.5 in nine times or more was regarded as satisfactory.

Table 1 lists the narrow gap length L, the temperature ratio ΔT/Tc, and the good or bad determination result of the flattening ratio of the steel pipe of satisfactory invention examples and unsatisfactory comparative examples.

In invention example 1, the input power of the electrical resistance welding was adjusted so as to satisfy the relationship between the tolerable narrow gap length L and the temperature ratio ΔT/Tc with the forming condition fixed.

In invention example 2, the edge bend during forming was adjusted so as to satisfy the relationship between the tolerable narrow gap length L and the temperature ratio ΔT/Tc with the input power fixed.

In contrast, in comparative examples 1 and 2, welding management was not performed during the electrical resistance welding, the welding power was adjusted, and the state of the discharged molten steel was checked only visually.

In invention example 3, the input power of the electrical resistance welding was adjusted so as to satisfy the relationship between the tolerable narrow gap length L and the temperature ratio ΔT/Tc with the forming condition fixed. In contrast, in comparative example 3, from the condition in invention example 3, the distance between the workcoils and the squeeze rolls was increased and no welding management was performed during the electrical resistance welding. The input power was adjusted so that the temperature difference Tᵢ - Tₒ between the inner and outer surfaces of the edge portion became equivalent to that of invention example 3.

In invention example 4, the input power of the electrical resistance welding was adjusted so as to satisfy the relationship between the tolerable narrow gap length L and the temperature ratio ΔT/Tc with the forming condition fixed. In contrast, in comparative example 4, from the condition in invention example 4, the amount of the edge bend was increased and no welding management was performed during the electrical resistance welding. The input power was adjusted so that the temperature Tc of the thickness center portion of the edge portion became equivalent to that of invention example 4.

Samples of 100 pieces having a length of 100 mm cut out from the obtained electrical resistance welded steel pipes were subjected to the flattening test for weld in conformity with JIS G3478: 2015. Thus, the flattening ratio was measured. Regarding the good or bad determination of the flattening ratio, an example is regarded as satisfactory when the ratio in the number of steel pipes satisfying a value of smaller than or equal to 0.5 is greater than or equal to 90%. It can be understood that the flattening ratio of the steel pipes is satisfactory in invention examples 1, 2, 3, and 4, and the flattening ratio of the steel pipes are below the satisfactory value in comparative examples 1, 2, 3, and 4.

**[Table 1]**

| Steel pipe No. | Thickness center temperature Tc [°C] | Temperature difference Tᵢ-Tₒ [°C | Temperature ratio ΔT/Tc | Narrow gap length L [mm] | Satisfact ory rate [%] | Example |
|---|---|---|---|---|---|---|
| 1 | 1400 | 120 | 0.086 | 3 | 95 | Invention example 1 |
| 2 | 1420 | 30 | 0.021 | 4 | 100 | Invention example 2 |
| 3 | 1400 | 90 | 0.064 | 1 | 89 | Comparative example 1 |
| 4 | 1400 | 280 | 0.200 | 2 | 87 | Comparative example 2 |
| 5 | 1390 | 160 | 0.115 | 2 | 100 | Invention example 3 |
| 6 | 1280 | 160 | 0.125 | 1 | 81 | Comparative example 3 |
| 7 | 1400 | -40 | -0.029 | 2 | 96 | Invention example 4 |
| 8 | 1400 | -120 | -0.086 | 1 | 75 | Comparative example 4 |

### Industrial Applicability

As has been described, when the welding management device described in the present invention is used, an electrical resistance welded steel pipe including an electrical resistance welded portion having a good quality can be provided.

### Reference Signs List

1 open pipe
2 fin pass roll
3 radio-frequency oscillator
31, 31a, 31b contact tip
40 welding stand
41a, 41b squeeze roll
42a, 42b top roll
10 welding management system
11 edge temperature information acquisition device
12 weld image capturing device
100 welding management device
110 input unit
111 input unit for edge temperature distribution data
112 input unit for weld image capturing data
121 edge temperature distribution processor
122 pre-electrical resistance welding edge temperature detector
123 space coordinate calculator
124 thickness direction temperature distribution detector
125 edge temperature difference calculator
131 welding image processor
132 pipe edge image detector
133 V convergence point extractor
134 V convergence angle calculator
135 narrow gap length calculator
141 welding state determiner
142 output unit
143 storage unit
20 edge detection image of weld image
201 heated portion
202 opening
202a, 202b both edge end surfaces of open pipe
La, Lb straight line
θ V convergence angle
203 welding bead
204 V convergence point (joint)
205 welding point
L narrow gap length

## Claims

1. An electrical resistance welded steel pipe welding management device that is a welding management device for an electrical resistance welded steel pipe manufactured by bending a steel sheet or a steel strip in a circumferential direction, causing both edge portions to butt against each other to form an open pipe, and then, performing electrical resistance welding by upsetting both the edge portions of the open pipe having butted against each other, the electrical resistance welded steel pipe welding management device comprising:
a pre-electrical resistance welding edge temperature detector configured to detect, before the electrical resistance welding, based on temperature distribution information in a thickness direction of at least one of the edge portions of the open pipe, an outer surface temperature Tₒ, an inner surface temperature Tᵢ, and a thickness center temperature Tc of the edge portion;
an edge temperature difference calculator configured to calculate a temperature difference ΔT between the outer surface temperature Tₒ and the inner surface temperature Tᵢ;
a V convergence point extractor configured to extract, based on image information of a region including both the edge portions of the open pipe and a welding point where both the edge portions of the open pipe are joined to each other to start welding, two straight lines converging along the edge portions to extract a V convergence point being an intersection of the two straight lines;
a V convergence angle calculator configured to calculate a V convergence angle θ formed by the two straight lines;
a narrow gap length calculator configured to calculate a distance from the V convergence point to the welding point as a narrow gap length L; and
a welding state determiner configured to determine whether an electrical resistance welding condition is satisfactory based on information of a ratio ΔT/Tc of the temperature difference ΔT to the thickness center temperature Tc, the V convergence angle θ, and the narrow gap length L.

2. The electrical resistance welded steel pipe welding management device according to Claim 1,
wherein the welding state determiner determines that the electrical resistance welding condition is satisfactory when the narrow gap length L is smaller than or equal to an upper limit value that has been preset in accordance with the ratio ΔT/Tc of the temperature difference ΔT to the thickness center temperature Tc and a value of the V convergence angle θ.

3. The electrical resistance welded steel pipe welding management device according to Claim 1 or 2,
wherein the welding state determiner determines whether the electrical resistance welding condition is satisfactory depending on whether the ratio ΔT/Tc of the temperature difference ΔT to the thickness center temperature Tc falls within a range that has been preset in accordance with a value of the V convergence angle θ and a value of the L.

4. An electrical resistance welded steel pipe welding management method that is a welding management method for an electrical resistance welded steel pipe manufactured by bending a steel sheet or a steel strip in a circumferential direction, causing both edge portions to butt against each other to form an open pipe, and then, performing electrical resistance welding by upsetting both the edge portions of the open pipe having butted against each other, the electrical resistance welded steel pipe welding management method comprising the steps of:
detecting a pre-electrical resistance welding edge temperature configured to detect, before the electrical resistance welding, based on temperature distribution information of at least one of the edge portions of the open pipe, an outer surface temperature Tₒ, an inner surface temperature Tᵢ, and a thickness center temperature Tc of the edge portion;
calculating an edge temperature difference configured to calculate the temperature difference ΔT between the outer surface temperature Tₒ and the inner surface temperature Tᵢ;
extracting a V convergence point configured to extract, based on image information of a region including both the edge portions of the open pipe and a welding point where both the edge portions of the open pipe are joined to each other to start welding, two straight lines converging along the edge portions to extract a V convergence point being an intersection of the two straight lines;
calculating a V convergence angle configured to calculate a V convergence angle θ formed by the two straight lines;
calculating a narrow gap length configured to calculate a distance from the V convergence point to the welding point as a narrow gap length L; and
determining a welding state configured to determine whether an electrical resistance welding condition is satisfactory based on information of a ratio ΔT/Tc of the temperature difference ΔT to the thickness center temperature Tc, the V convergence angle θ, and the narrow gap length L.

5. An electrical resistance welded steel pipe manufacturing method for manufacturing an electrical resistance welded steel pipe by bending a steel sheet or a steel strip in a circumferential direction, causing both edge portions to butt against each other to form an open pipe, and then, performing electrical resistance welding by upsetting both the edge portions of the open pipe having butted against each other,
wherein, during the electrical resistance welding, welding management is performed by the electrical resistance welded steel pipe welding management method according to Claim 4.

6. An electrical resistance welded steel pipe welding management system, the system comprising:
the electrical resistance welded steel pipe welding management device according to any one of Claims 1 to 3;
an edge temperature information acquisition device configured to acquire, before electrical resistance welding, temperature distribution information of at least one of edge portions of an open pipe; and
a weld image capturing device configured to capture, before the electrical resistance welding, an image of both the edge portions of the open pipe and the welding point formed by convergence of both the edge portions.
